# EUROPEAN PATENT SPECIFICATION

(11) **EP 1 983 684 B1**
(45) Date of publication and mention of the grant of the patent: **12.05.2010**
(21) Application number: 07702091.5
(22) Date of filing: 16.01.2007
(51) Int. Cl.: H04L 12/14, H04M 15/28

(54) **Method for flow quantity statistics based on user services**
Verfahren für Flussmengenstatistiken auf der Basis von Benutzerdiensten
Procédé de statistiques des débits sur la base des services utilisateurs

(30) Priority: 17.01.2006 CN 200610001449
(43) Date of publication of application: 22.10.2008
(73) Proprietor: Huawei Technologies Co., Ltd., Longgang District, Shenzhen Guangdong 518129 (CN)
(72) Inventor: WANG, Feng, Shenzhen Guangdong 518129 (CN); JIANG, Tao, Shenzhen Guangdong 518129 (CN); HUANG, Wei, Shenzhen Guangdong 518129 (CN); TAN, Peilong, Shenzhen Guangdong 518129 (CN); ZHAO, Jun, Shenzhen Guangdong 518129 (CN)
(74) Representative: Haley, Stephen
(86) International application number: PCT/CN2007/000159
(87) International publication number: WO 2007/082465

(56) References cited:
- WO-A-2004/036890
- WO-A-2005/057816
- CN-A- 1 395 391
- CN-A- 1 625 116
- CN-A- 1 681 283
- US-A1- 2005 026 592
- US-B1- 6 687 817
- CHAIRMAN ET AL: "Focus Group Technical Specification Part 5: Operations, Administration and Maintenance OEB_AMPamp; Provision aspects for FS-VDSL Services (06/2002); TD 24" ITU-T DRAFT STUDY PERIOD 2001-2004, INTERNATIONAL TELECOMMUNICATION UNION, GENEVA ; CH, vol. STUDY GROUP 16, 15 October 2002 (2002-10-15), pages 1-47, XP017429610
- PETER ADAMS: "Technical Report DSL Forum, FS-VDSL EMS to NMS Interface Functional Requirements"[Online] no. TR-065, March 2004 (2004-03), pages 1-24, XP002510117 Retrieved from the Internet: URL:http://www.broadband-forum.org/technic al/download/TR-065.pdf> [retrieved on 2009-01-13]
- ABSTRACT ARTICLE: 'Full-Service VDSL - Operations, Administration Maintenance & Provision aspects; H.611 (07/03)' ITU-T STANDARD IN FORCE (I) 14 July 2003, INTERNATIONAL TELECOMMUNICATION UNION, GENEVA, CH, XP017401536

## Description

### Field of the Invention

The present invention relates to network communication technologies, and in particular, to a terminal device, system and method for measuring traffic based on user services.

### Background of the Invention

Broadband Internet access is increasingly popular. The charging for broadband Internet access is also attracting more and more attention. Monthly fee charging, duration based charging and traffic based charging are three mainstream charging modes.

Reasonable charging mode should be based on the traffic and the service type. Therefore, it is urgent to implement charging based on the user service type and traffic. In prior arts, however, it is impossible for any of the preceding charging modes to collect traffic information based on the service type and therefore, charging based on the service type is impossible.

WO 2005/057816 discloses a system and method for carrying a return path signal from a cable system set top box to a cable television head end via a passive optical network. The return path signal is received by a demodulator for demodulating and decoding the signal. A digit representation of the return path signal is carried over the passive optical network to an optical terminal unit operative in conjunction with a modulator for producing a radio frequency signal in response thereto for transmittal to the cable television head end.

WO 2004/036890 discloses a method for charging of data reaching a network element of a communication network during a data session, the data session comprising a plurality of data flows, with each flow being distinguishable by a set of flow parameters, the method comprising the steps of: enforcing a charging policy at the network element to be applied to said data, wherein said charging policy defines charging rules per flow; observing said data reaching said network element and detecting at least one flow of data; and matching said detected flow of data to an enforced charging policy, applying said matching charging policy to said flow, thereby generating charging information.

US 6,687,817 discloses a method and apparatus that configure a new network device via the network. The method consists of initiating a boot sequence on a first device. The boot process is suspended prior to performing network set up. The new device sends a configuration request to a computer on the network. The computer generates configuration data for the new device and sends configuration data to the new device via a multicast message. The new device then writes the configuration data into a file used by an operating system for network configuration on the first device and continues the boot sequence.

US 2005/0026592 discloses a method and system for rating a data communication session between a network and a wireless device. According to an exemplary aspect of the method, the method monitors a series of events, namely, a setup event, a begin event and an end event, which take place during a communication session. The monitoring of such events is accomplished by a data rating application which resides on the wireless device. By monitoring of such events, the data rating application is then able to rate the communication session using a number of rating methods. The rating method selected includes both how to meter the data transmitted during a data communication session and determine the rate to be applied to each metered increment. Examples of methods used to meter the data include time and volume. Different rating methods which can be used to rate the communication session include, for example, application, data utilization, source of data, data type, class of service, quality of service and transmission efficiency.

CHAIRMAN ET AL("Focus Group Technical Specification Part 5: Operations, Administration and Maintenance OEB_AMPamp; Provision aspects for FS-VDSL Services(06/2002); TD 24"ITU-T DRAFT STUDY PERIOD 2001-2004, INTERNATIONAL TELECOMMUNICATION UNION, GENEVA; CH, vol. STUDY GROUP 16, 15 October 2002(2002-10-15), pages 1-47, XP017429610) discloses: how one or more ATM flows are set up within a FS-VDSL platform, and how to ensure accuracy of usage information within the FS-VDSL platform; The CHAIRMAN ET AL also discusses the software upgrades and the element management system for the FS-VDSL platform.

PETER ADAMS ("Technical Report DSL Forum, FS-VDSL EMS to NMS Interface Functional Requirements"[Online]no. TR-065, March 2004 (2004-03), pages 1-24, XP002510117 Retrieved from the Internet: URL:http://wwwbroadband-forum. Org/technical/download/TR-065.pdf [Retrieved on 20009-01-13]) discloses high-level functional requirements describing a north-bound interface from an FS-VDSL Element Management System(EMS) to the Network Layer Network Management System(NMS) for ATM-based FS-VDSL access networks. In particular, Accounting Management is discussed. In order to support certain charging scenarios the FS-VDSL platform must allow ATM switching event logging and ATM cell count logging on a per flow_ID basis. Switching event and ATM cell count information shall be labeled with start and stop times.

CN 1395391 discloses the charging method used for the general broadband access network. The time period of the operation and the traffic of flow are recorded respectively based on the services in different types of rate of flow obtained by the user. When charging statistics is carried out, the different charging policies are adopted for the user in each service type so as to complete charging the user of broadband. The charging method is applicable to the broadband access network providing multiple value-added services for users. The method meets the requirement of respectively charging policies being executed for the services in different types so that it is the reasonable, flexible, accurate, feasible charging method.

XP17401536 ("Full-Service VDSL-Operations, Administration Maintenance & Provision aspects", ITU-T Recommendation H.611, 07/2003, pages 1-31) defines service provisioning, service assurance, network build and data management requirements for video, data and voice services on an end-to-end Full-Service VDSL platform. It also specifies the functionality of the Element Management System and the management interfaces of the platform.

### Summary of the Invention

The present invention provides a method for measuring traffic based on user services, enabling traffic measurement based on different types of services.

According to the present invention there is provided a method for measuring traffic based on user services, comprising the steps of:
receiving, by a terminal device, service configuration information that comprises mapping relationship between service-accessing ports of the terminal device and user service types, from a terminal service configuration server at the network side;
distinguishing, by the terminal device, types of user services accessed by the terminal device according to the received service configuration information and
measuring, by the terminal device, traffic of each of the distinguished user service types,
wherein the step of receiving service configuration information comprises:
sending, by the terminal device, a registration request that comprises a terminal identifier to an equipment management server, via an optical line terminal, OLT;
by the equipment management server, receiving the registration request, obtaining the terminal type, service-accessing port type of the terminal device and number of service-accessing ports according to the terminal identifier in the message, and sending the obtained information to an operating support system, OSS, at the network side;
by the OSS, generating the service configuration information according to the information from the equipment management server and sending the service configuration information to the terminal service configuration server; and
by the terminal service configuration server, receiving and storing the service configuration information and upon receipt of a service configuration request message from the terminal device, obtaining the associated service configuration information according to the terminal identifier in the message and sending the service configuration information to the terminal device.

According to the present invention, user service types are distinguished on a terminal device and the traffic of different types of user services is measured respectively; Thus, the measurement of the traffic of each user service type is enabled on the terminal device. In addition, in the present invention, traffic measurement information based on user services is reported to the network side, so that the charging system can apply different charging policies to different user service types. At the same time, it is realized to charge for different user services separately on a terminal device, the network configuration is hence more flexible and more reasonable.

### Brief Description of the Drawings

Figure 1 is a schematic diagram illustrating the main structure of the terminal device according to an embodiment of the invention;
Figure 2 is a schematic diagram of the system for measuring traffic according to an embodiment of the invention;
Figure 3 shows the structure of the system for measuring traffic according to an embodiment of the invention;
Figure 4 shows the structure of a terminal device in the system for measuring traffic according to an embodiment of the invention;
Figure 5 shows a general flowchart for measuring traffic based on user services according to an embodiment of the invention;
Figure 6 shows a flowchart for measuring traffic according to an embodiment of the invention; and
Figure 7 shows a schematic diagram the contents of a message that carries traffic measurement information sent by the terminal device according to an embodiment of the invention.

### Detailed Description of the Invention

For better understanding of the purpose, technical scheme and benefits of the present invention, the embodiments of the invention will be detailedly described by reference to the accompanying drawings.

The key of the present invention is to distinguish the types of services on a terminal device and measure the traffic of each service type respectively.

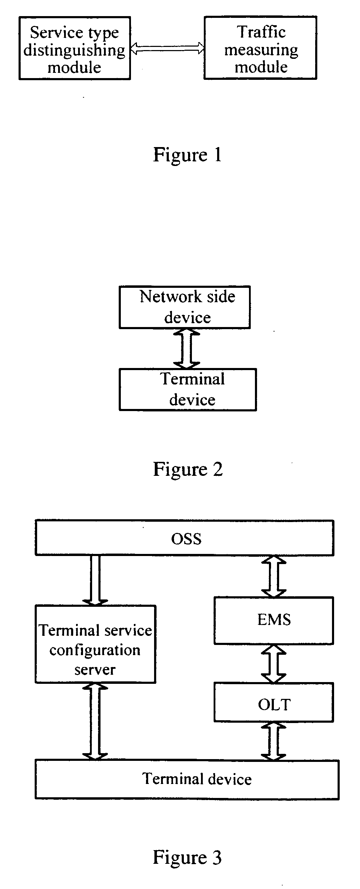

According to an embodiment, a terminal device shown in Figure 1, includes a service type distinguishing module and a traffic measuring module. The service type distinguishing module distinguishes the types of services accessed by the terminal device. The traffic measuring module measures the traffic of each service type distinguished by the service type distinguishing module.

The service type distinguishing module may distinguish services accessed by the terminal device by determining the type of service accessed via each port, based on the service configuration information that includes the mapping relationship between ports and service types in the terminal device. Then the traffic measuring module measures the traffic at each port to achieve measuring traffic based on user services. The service configuration information may be set on the terminal device or sent by the network side to the terminal device.

When the service configuration information in the terminal device is from the network side, the terminal device is based on a system shown in Figure 2, which includes a network device and a terminal device. The network device sends service configuration information to the terminal device. The service configuration information includes a mapping relationship between ports of the terminal device and service types. The terminal device distinguishes types of services accessed by the terminal device according to the received service configuration information and measures the traffic of each service type.

The preceding system may be a passive optical network (PON). Then, the terminal device is an optical network terminal (ONT) and the network device may include: a terminal service configuration server, an operation support system (OSS), an equipment management server (EMS) and an optical line terminal (OLT). The following provides details of the embodiments of the invention.

Figure 3 shows the structure of the system for measuring traffic according to an embodiment of the invention. As shown in Figure 3, the system includes an OLT, an EMS, an OSS, a terminal service configuration server and a terminal device.

The OLT is adapted to forward messages between the terminal device and the EMS. This includes sending a registration request from the terminal device to the EMS. The registration request contains a terminal identifier.

The EMS stores identifier information and port information of the terminal device. It may report the identifier information and port information of the terminal device to the OSS according to the registration request of the terminal device, receive the OLT configuration information associated with the terminal device from the OSS and configure the OLT.

The OSS is adapted to receive the identifier information and port information sent from the EMS, determine the service configuration information of the terminal device according to the information, forward the service configuration information of the terminal device to the terminal service configuration server, and send the OLT configuration information associated with the terminal device to the EMS. The terminal service configuration information determined by the OSS includes a mapping relationship between ports of the terminal device and service types.

The terminal service configuration server is adapted to receive service configuration information from the OSS and store the information; and, upon receipt of a service configuration request from the terminal device, obtain the corresponding service configuration information according to the request and send the obtained service configuration information to the terminal device.

The terminal device is adapted to send a registration request to the OLT and a service configuration request to the terminal service configuration server, and receive service configuration information from the terminal service configuration server. It distinguishes service types by ports according to the service configuration information, measures the traffic volume of each service type by measuring the traffic at each port, and report the measured traffic information to a charging management server.

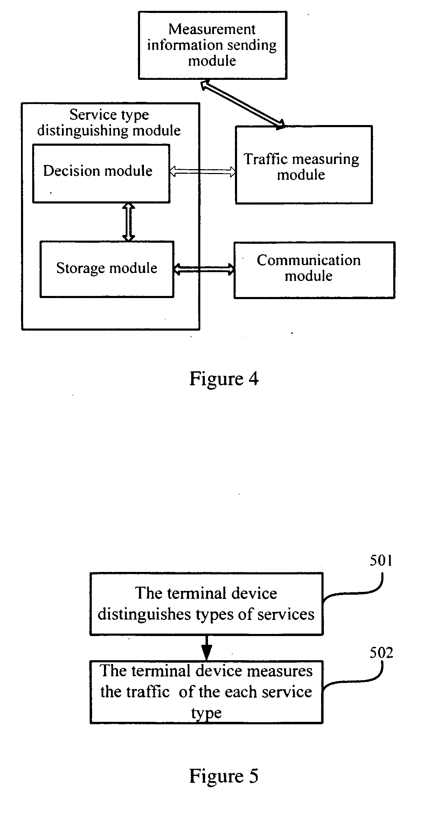

Specifically, the composition of the preceding terminal device is shown in Figure 4. The terminal device includes a service type distinguishing module, a traffic measuring module, a communication module, a service configuration requesting module and a measurement information sending module, where the service type distinguishing module may further include a service type determining module and a storage module.

The storage module is adapted to store service configuration information that contains a mapping relationship between ports and service types.

The service type determining module is adapted to distinguish types of services accessed by the terminal device by determining a service type associated with each port according to the service configuration information stored in the storage module, and notify the traffic measuring module of the service type associated with each port. If it's set in the service configuration information is that port 1 is used for accessing voice service, port 2 for accessing data service, and port 3 for accessing video service, according to the service configuration information, the service type determining module can determine that the service accessed via port 1 is voice service, the service accessed via port 2 is data service and the service accessed via port 3 is video service.

The service configuration information is obtained by the terminal device from the terminal service configuration server.

The service configuration requesting module is adapted to generate a service configuration request that contains a terminal identifier and send the request to the terminal service configuration server.

The communication module is adapted to receive service configuration information sent by the terminal service configuration server and store the service configuration information to the storage module.

The measurement information sending module is adapted to send traffic measurement information to a charging management server at the network side. Specifically, the measurement information may be sent at regular intervals. The traffic measurement information includes identifier information of a terminal device, service type titles and the uplink and downlink traffic of each service type.

The system may further include a charging management server, adapted to receive traffic measurement information sent by the terminal device and charge for the user service according to the measurement information.

The above describes the system for measuring traffic and the terminal device in the system through detailed embodiments. The following embodiments describe the method for measuring traffic in details.

In the method for measuring traffic based on user services, the terminal device first distinguishes service types and then measures traffic. As shown in Figure 5, the general process of the method includes:
Step 501: The terminal device distinguishes types of services accessed by the terminal device.
Step 502: The terminal device measures the traffic of each of the distinguished service types.

In step 501, the terminal device may distinguish services accessed via different ports according to the service configuration information that is sent upon request of the terminal and includes a mapping relationship between ports and service types. Then, the terminal can measure the traffic of each service type by measuring the traffic at each port.

In an embodiment of the invention, the method for measuring traffic is applied to a PON, and a terminal device requests service configuration information from the network side.

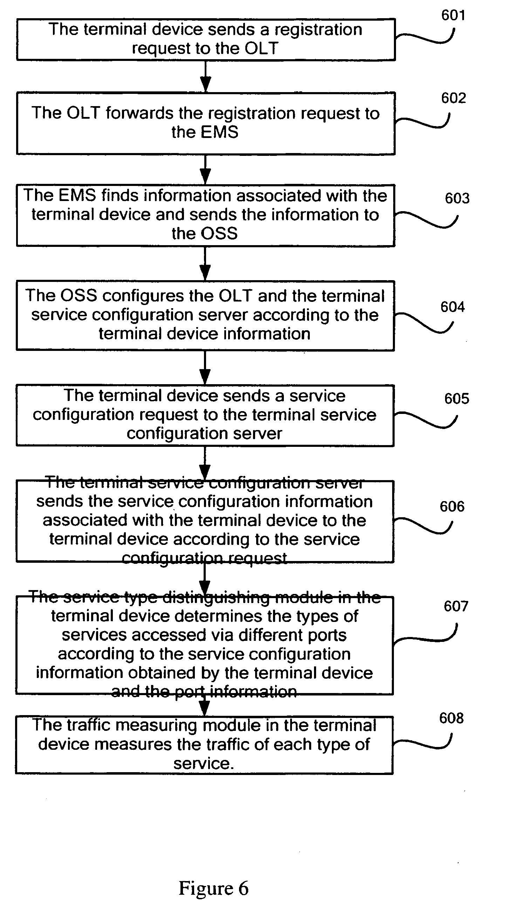

In this embodiment of the invention, a terminal device first triggers an OSS to send the service configuration information associated with the terminal device to a terminal service configuration server and send the associated OLT configuration information to an EMS. On this basis, the terminal device requests the associated service configuration information from the terminal service configuration server. The service configuration information contains a mapping relationship between ports of the terminal device and services. Then, the service type distinguishing module of the terminal device can distinguish services according to the service configuration information and the traffic measuring module can measure the traffic of each distinguished service. The specific process, as shown in Figure 6, includes:
Step 601: The terminal device sends a registration request to the OLT. The registration request contains identifier information of the terminal device, such as a terminal ID.
Step 602: The OLT forwards the registration request to the EMS.
Step 603: The EMS finds information associated with the terminal device in its database according to the identifier information in the terminal registration request. The founded information includes the terminal type, port type of the terminal device and number of ports. The EMS reports the information to the OSS. For example, the EMS finds that the terminal device is an optical access device and the number of ports is 4 according to the terminal ID.
Step 604: The OSS generates service configuration information of the terminal device according to the terminal type and number of ports and sends the service configuration information to the terminal service configuration server. The terminal service configuration server may store the service configuration information in its database. In addition, the OSS sends device configuration information set for the OLT to the EMS and the EMS configures the OLT according to the device configuration information. The service configuration information may specify a port for each type of service; the device configuration information may be so set as to allow the services uploaded by terminals under the OLT pass.

Now, the terminal service configuration server has the service configuration information associated with the terminal device. The terminal device can obtain the associated service configuration information after sending a request for service configuration information to the terminal service configuration server.
Step 605: The terminal device sends a service configuration request to the terminal service configuration server. The message contains identifier information of the terminal device, such as a terminal ID.
Step 606: The terminal service configuration server searches its database for service configuration information associated with the terminal device according to the terminal identifier information in the service configuration request and sends the associated service configuration information to the terminal device.
Step 607: The service type distinguishing module in the terminal device determines the types of services accessed via different ports according to the service configuration information obtained by the terminal device and the port information.

After the terminal device obtains the service configuration information, its service type distinguishing module can determine the type of an accessed service according to the service configuration information. For example, the service configuration information includes: port 1 for access to voice service and assigned VLAN 100, port 2 for access to data service and assigned VLAN 200, and port 3 for access to video service and assigned VLAN 300. Then, the service type distinguishing module tags the service accessed via port 1 with a voice service VLAN ID 100, the service accessed via port 2 with a data service VLAN ID 200, and the service accessed via port 3 with a video service VLAN ID 300. Thus, services accessed by the terminal device are distinguished.

Step 608: The traffic measuring module in the terminal device measures the traffic of each type of service. The traffic measuring module measures the traffic of each type of service respectively. For example, the measurement result is as follows: for the voice service, the uplink traffic is 100 KB, and the downlink traffic is 100 KB; for the data service, the uplink traffic is 1 KB, and the downlink traffic is 64 MB; for the video service, the uplink traffic is 1 KB, and the downlink traffic is 10 MB.

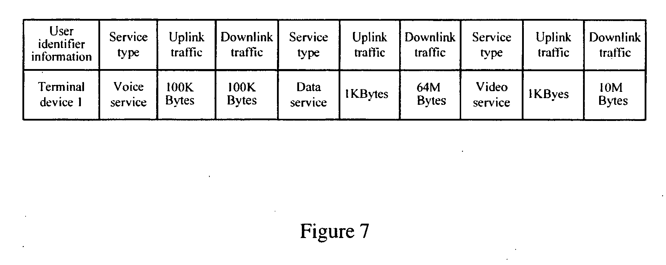

To enable the service provider to charge for each type of service, the terminal device may send the traffic measurement result to the service provider after measuring the traffic of each type of service. The service provider can then apply different charging policies to different services and complete charging with reference to the traffic measurement of each service type. The terminal device may send traffic measurement information at regular intervals in the form of a message. The traffic measurement message contains identifier information of the terminal device, service type titles and the uplink and downlink traffic of each service type. As shown in Figure 7, for terminal device 1, the uplink traffic of voice service is 100 KB and the downlink traffic of voice service is 100 KB; the uplink traffic of data service is 1 KB and the downlink traffic of data service is 64 MB; and the uplink traffic of video service is 1 KB and the downlink traffic of video service is 10 MB.

## Claims

1. A method for measuring traffic based on user services, comprising the steps of:
receiving, by a terminal device, service configuration information that comprises mapping relationship between service-accessing ports of the terminal device and user service types, from a terminal service configuration server at the network side;
distinguishing, by the terminal device, types of user services accessed by the terminal device according to the received service configuration information (501); and
measuring, by the terminal device, traffic of each of the distinguished user service types (502),
wherein the step of receiving service configuration information comprises:
sending, by the terminal device, a registration request that comprises a terminal identifier to an equipment management server, via an optical line terminal, OLT, (601,602);
by the equipment management server, receiving the registration request, obtaining the terminal type, service-accessing port type of the terminal device and number of service-accessing ports according to the terminal identifier in the message, and sending the obtained information to an operating support system, OSS, at the network side (603);
by the OSS, generating the service configuration information according to the information from the equipment management server and sending the service configuration information to the terminal service configuration server (604); and
by the terminal service configuration server, receiving and storing the service configuration information and upon receipt of a service configuration request message from the terminal device (605), obtaining the associated service configuration information according to the terminal identifier in the message and sending the service configuration information to the terminal device (606).

2. The method of claim 1, further comprising the step of sending, by the terminal device, traffic measurement information to a charging management server.

3. The method of claim 2, wherein the traffic measurement information comprises terminal identifier information, service type titles, and uplink and downlink traffic of each user service type.

## Patentansprüche

1. Verfahren zur Messung von Verkehr auf der Basis von Benutzerdiensten, mit den folgenden Schritten:
ein Endgerät empfängt Dienstkonfigurationsinformationen, die eine Abbildungsbeziehung zwischen Dienstzugriffsports des Endgeräts und Benutzerdiensttypen umfassen, von einem Endgerätedienstkonfigurationsserver auf der Netzwerkseite;
das Endgerät unterscheidet Arten von Benutzerdiensten, auf die das Endgerät zugreift, gemäß den empfangenen Dienstkonfigurationsinformationen (501); und
das Endgerät misst Verkehr jedes der unterschiedenen Benutzerdiensttypen (502),
wobei der Schritt des Empfangens von Dienstkonfigurationsinformationen Folgendes umfasst:
das Endgerät sendet eine Registrationsanforderung, die eine Endgerätekennung umfasst, über einen optischen Leitungsabschluss OLT zu einem Geräteverwaltungsserver (601, 602);
der Geräteverwaltungsserver empfängt die Registrationsanforderung, erhält den Endgerätetyp, den Dienstzugriffsporttyp des Endgeräts und die Anzahl der Dienstzugriffsports gemäß der Endgerätekennung in der Nachricht und sendet die erhaltenen Informationen zu einem Betriebsunterstützungssystem OSS auf der Netzwerkseite (603);
das OSS erzeugt die Dienstkonfigurationsinformationen gemäß den Informationen aus dem Geräteverwaltungsserver und sendet die Dienstkonfigurationsinformationen zu dem Endgerätedienstkonfigurationsserver (604); und
der Endgerätedienstkonfigurationsserver empfängt und speichert die Dienstkonfigurationsinformationen und erhält beim Empfang einer Dienstkonfigurationsanforderungsnachricht von dem Endgerät (605) die assoziierten Dienstkonfigurationsinformationen gemäß der Endgerätekennung in der Nachricht und sendet die Dienstkonfigurationsinformationen zu dem Endgerät (606).

2. Verfahren nach Anspruch 1, ferner mit dem Schritt des Sendens von Verkehrsmessinformationen zu einem Vergebührungsverwaltungsserver durch das Endgerät.

3. Verfahren nach Anspruch 2, wobei die Verkehrsmessinformationen Gerätekennungsinformationen, Diensttyptitel und Aufwärtsstrecken- und Abwärtsstreckenverkehr jedes Benutzerdiensttyps umfassen.

## Revendications

1. Procédé de mesure de trafic fondé sur des services aux usagers, comprenant les étapes consistant à :
recevoir en provenance d'un serveur de configurations de services aux terminaux du côté du réseau, grâce à un dispositif terminal, des informations sur les configurations des services qui comprennent des relations de mappage entre des ports d'accès aux services du dispositif terminal et des types de services aux usagers,
distinguer (501), grâce au dispositif terminal, des types de services aux usagers auxquels il peut être fait accès par le dispositif terminal en fonction des informations reçues sur les configurations des services, et
mesurer (502), grâce au dispositif terminal, le trafic de chacun des types de services aux usagers distingués, dans lequel l'étape consistant à recevoir des informations sur les configurations des services comprend :
envoyer (601, 602), grâce au dispositif terminal, une demande d'enregistrement qui comprend un identificateur du terminal à un serveur de gestion d'équipements par l'intermédiaire d'un terminal à ligne optique, OLT,
recevoir, grâce au serveur de gestion d'équipements, la demande d'enregistrement, récupérer le type de terminal, le type de ports d'accès aux services du dispositif terminal et le nombre de ports d'accès aux services en fonction de l'identificateur du terminal contenu dans le message, et envoyer (603) les informations obtenues vers un système d'exploitation de soutien, OSS, du côté du réseau,
générer (604), grâce au système OSS, les informations de configuration de services conformes aux informations issues du serveur de gestion des équipements et envoyer les informations sur les configurations des services au serveur de configurations de services aux terminaux, et recevoir et mémoriser, grâce au serveur de configurations de services aux terminaux, les informations sur les configurations des services et, à la réception du message de demande de configuration de services provenant du dispositif terminal (605), récupérer les informations sur les configurations des services associées en fonction de l'identificateur du terminal dans le message et envoyer (606) les informations sur les configurations des services au dispositif terminal.

2. Procédé selon la revendication 1, comprenant en outre l'étape consistant à envoyer, grâce au dispositif terminal, des informations de mesure de trafic à un serveur de gestion de la facturation.

3. Procédé selon la revendication 2, dans lequel les informations de mesure de trafic comprennent les informations de l'identificateur du terminal, les titres des types de services et le trafic de liaison montante et de liaison descendante de chaque type de service aux usagers.
